# DEMANDE DE BREVET EUROPEEN

(11) **EP 1 802 022 A1**
(43) Date de publication de la demande: **27.06.2007**
(21) Numéro de dépôt: 06126666.4
(22) Date de dépôt: 20.12.2006
(51) Int. Cl.: H04L 9/00

(54) **Code correcteur d'erreur sécurisé**

(30) Priorité: 21.12.2005 FR 0513071
(71) Demandeur: ST MICROELECTRONICS S.A., 92120 Montrouge (FR)
(72) Inventeur: Francillon, Aurélien, 38000 Grenoble (FR); Roca, Vincent, 38420 Domene (FR); Neumann, Christoph, 38000 Grenoble (FR); Moniot, Pascal, 38190 Bernin (FR)
(74) Mandataire: de Beaumont, Michel

(57) **Abrégé**

L'invention concerne un procédé et un système de codage de données numériques (DATA) représentées par des systoles source, par un code correcteur d'erreur de génération de symboles de parité à partir, pour chaque symbole de parité, de plusieurs symboles source et d'au moins un symbole de parité de rang précédent, le procédé comportant au moins des étapes de soumettre une partie (mk) des symboles source à au moins un premier chiffrement (15), et de soumettre les symboles chiffrés obtenus et le reste des symboles source non chiffrés au code correcteur d'erreur (13).

## Description

### Domaine de l'invention

La présente invention concerne de façon générale les transmissions de données numériques utilisant des codes correcteurs d'erreur. L'invention concerne plus particulièrement les transmissions dans lesquelles on souhaite que les données ne soient lisibles que par un récepteur autorisé. L'invention s'applique plus particulièrement aux systèmes de transmission monodirectionnels, par exemple de radiodiffusion (broadcasting), c'est-à-dire dans lesquels le récepteur n'est pas capable de communiquer avec l'émetteur.

### Exposé de l'art antérieur

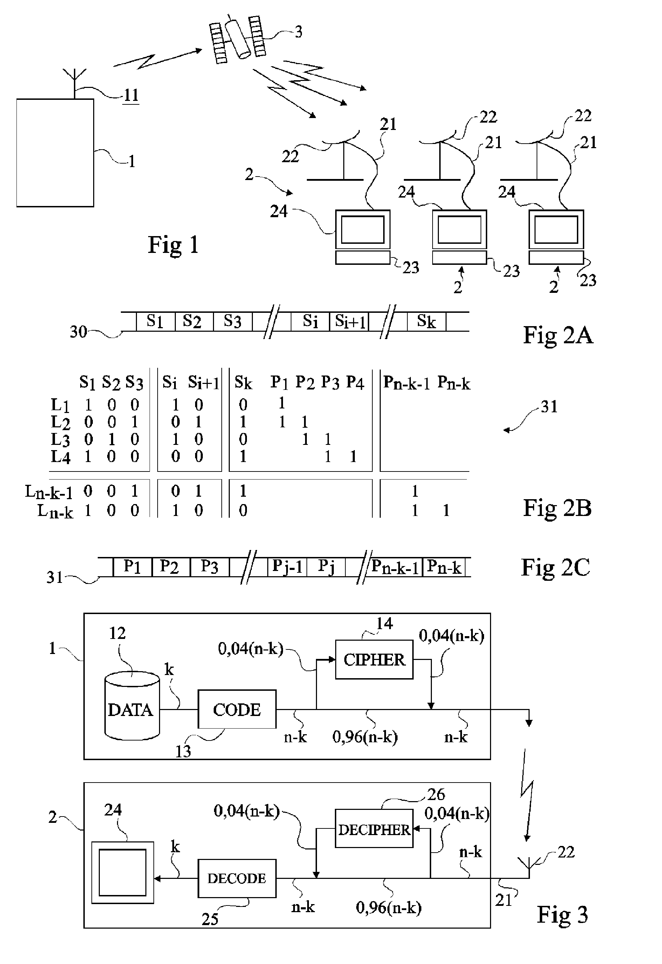

La figure 1 représente, de façon très schématique et sous forme de blocs, un exemple de système de transmission de données du type auquel s'applique la présente invention. Il s'agit d'un système de radiodiffusion (par exemple, DVB - Digital Video Broadcasting) dans lequel un émetteur 1 encode des données à destination d'un grand nombre de récepteurs 2. Le nombre de récepteurs n'est généralement même pas connu. La transmission peut être une transmission par voie hertzienne, avec ou sans intervention d'un satellite relais 3. Chaque récepteur 2 comporte une antenne 22 communiquant, par exemple par liaison filaire 21, avec un poste de télévision 24. Côté émetteur 1, le diffuseur communique au moyen d'une antenne émettrice 11 avec le satellite 3 pour diffuser des émissions et plus généralement n'importe quelles données. Plus généralement, le support de communication peut être quelconque (réseau Internet par exemple).

L'exemple de la figure 1 est un exemple de système monodirectionnel, en ce sens que les récepteurs ne sont pas en mesure d'émettre en retour des informations vers le satellite à destination de l'émetteur.

Quand on souhaite limiter les droits d'accès à certains programmes, il est nécessaire d'adjoindre au téléviseur 24, ou d'intégrer à celui-ci, un décodeur 23 particulier comportant des clés permettant de décoder des programmes transmis de façon chiffrée.

D'autres systèmes auxquels s'applique également la présente invention sont les systèmes de type téléphonie mobile dans lesquels, bien qu'il existe un canal de communication bidirectionnel entre l'opérateur et le téléphone mobile, les téléphones sont susceptibles de recevoir des données diffusées à grande échelle, l'opérateur ne servant que de relais. Il est alors difficilement envisageable de faire communiquer chaque téléphone mobile récepteur avec l'émetteur, le téléphone mobile se comportant comme un récepteur de programme diffusé.

Le plus souvent, dans les systèmes de transmission de données numériques, le flux de données est combiné par un code correcteur d'erreur (FEC pour Forward Error Correction), dont le rôle est de permettre de récupérer des données en cas de perturbation de la transmission. Le besoin des codes correcteurs d'erreur est également lié à l'absence de communication bidirectionnelle empêchant le récepteur d'indiquer à l'émetteur qu'il n'a pas reçu correctement une partie des données.

Il existe des codes qui opèrent sur un canal binaire symétrique, ainsi nommé car un bit peut être reçu sans erreur ou être inversé. Le code correcteur d'erreur vérifie alors la cohérence des bits reçus au travers du canal. Ces codes correcteurs d'erreurs sont en général intégrés à la couche physique.

Il existe également des codes correcteurs d'erreur qui opèrent sur un canal à effacement de symboles, les symboles représentant un ou plusieurs bits ou octets. Ce canal est ainsi nommé car un symbole peut être soit reçu sans erreur, soit détruit par le canal. Le symbole est l'unité de traitement (séquence d'octets ou de bits) par le système et sa taille est fixe. Ces codes correcteurs d'erreurs sont en général utilisés au dessus de la couche physique.

La présente invention s'applique au traitement des codes correcteurs d'erreur au niveau des symboles dont la taille est le plus souvent de plusieurs centaines ou plusieurs milliers d'octets ou de bits.

Un tel codage engendre une augmentation du volume de données à transmettre. On définit généralement un ratio de codage (code rate) comme étant le nombre (k) de symboles source de l'objet à transmettre (fichier, flux de données, etc.) divisé par un nombre (n) total de symboles. Les n symboles sont constitués des k symboles source et des n-k symboles de parité. Le ratio k/n est inférieur ou égal à l'unité, généralement compris entre 2/3 et 1.

Les figures 2A, 2B et 2C illustrent, de façon très schématique, un exemple de codage correcteur d'erreur du type auquel s'applique plus particulièrement la présente invention. Il s'agit d'une technique dite LDPC (Low Density Parity Check) qui exploite une matrice de parité composée d'une partie (ou sous-matrice) de symboles source et d'une partie (ou sous-matrice) de symboles de parité. L'interprétation d'une telle matrice permet d'obtenir les symboles de parité transmis en plus des symboles source.

La figure 2A représente, de façon arbitraire, un flux 30 de symboles source S₁, S₂..., Sᵢ, Sᵢ₊₁... , Sₖ. La figure 2B illustre un exemple de matrice 31 de parité dans laquelle chacune des k premières colonnes (sous-matrice de symboles source) est affectée à l'un des symboles Sᵢ (i étant compris entre 1 et k) et chacune des n-k dernières colonnes (sous-matrice de symboles de parité) est affectée à l'un des symboles de parité Pⱼ (j étant compris entre 1 et n-k). La matrice de parité comporte n-k lignes L₁, L₂, etc. respectivement affectées aux symboles de parité à calculer (et à transmettre). Chaque élément de la première partie de la matrice représente la prise en compte (1) ou non (0 ou rien) du symbole de la colonne correspondante dans le calcul du symbole de la ligne courante. La construction de la matrice de parité est dans cet exemple dite en escalier (LDPC-staircase). Elle peut comporter plusieurs milliers de colonnes et plusieurs milliers de lignes.

La matrice 31 se lit en considérant que la combinaison de type OU-Exclusif (⊕) des symboles source ou de parité identifiés dans chaque ligne doit être nulle. Par exemple, pour la troisième ligne, S₂⊕...Sᵢ⊕...⊕P₂⊕P₃=0.

Côté réception, connaissant la matrice de parité, il est possible d'effectuer les opérations de récupération des symboles source transmis.

La constitution de la sous-matrice de symboles source dépend de l'application. Elle peut faire appel à une génération pseudoaléatoire.

Une première solution pour chiffrer un flux de données serait de soumettre l'ensemble des symboles en amont ou en aval du codage à un algorithme de chiffrement (AES, DES, RC4, etc.). Un inconvénient d'une telle solution est le temps de traitement, que ce soit côté émetteur ou côté récepteur.

En effet, les codes de correction d'erreur et algorithmes de chiffrement ont en commun de devoir traiter des données dans leur intégralité et d'être des tâches coûteuses en accès et/ou consommation mémoire ainsi qu'en temps traitement par une unité centrale, donc en énergie.

Ils poursuivent toutefois d'autres objectifs opposés, notamment le fait qu'un code correcteur d'erreur cherche à faciliter la récupération des données alors que le chiffrement vise à l'inverse à rendre difficile la récupération des données pour un récepteur ne possédant pas la bonne clé.

Un problème qui se pose pour adjoindre une fonction de chiffrement des données à un code correcteur d'erreur est que cela engendre un temps de traitement qui s'ajoute au temps de codage. Ce problème est particulièrement sensible côté récepteur, où les capacités de traitement doivent être optimisées.

La figure 3 illustre, de façon très schématique et sous forme de blocs, un procédé connu de chiffrement de données à diffuser avec une fonction de correction d'erreur. Ce procédé est décrit dans l'article "Securing Bulk Content Almost for Free" de J. Byers et al., accepté dans Computer Communication Journal en Janvier 2005 (http://www.sciencedirect.com) et à paraître dans "Computer Communication Journal, Special Issue on Network Security".

Côté émetteur 1, des données DATA (bloc 12) à transmettre sont soumises à un codage (bloc 13, CODE) de type FEC. La sortie du codage fournit un nombre de symboles supérieur au nombre de symboles en entrée. Puis, 4 % des symboles codés (0,04(n-k)) sont soumis avant transmission à un chiffrement (bloc 14, CIPHER) tandis que les 96 % restants (0,96(n-k)) sont transmis directement. Le codage peut être de type dit Tornado, mais il peut également être de type LDPC ou d'un autre type. L'émetteur comporte bien entendu des éléments d'émission (non représentés) pour, par exemple, une radiodiffusion.

Côté récepteur 2, le flux de n-k symboles reçus depuis l'antenne 22 est, après démodulation et autres traitements de réception (adaptation de niveau, filtrage, etc.), soumis pour partie (4 %) à un déchiffrement (bloc 26, DECIPHER) avant d'être entièrement soumis au décodage (bloc 25, DECODE), 96 % des symboles n'ayant pas besoin d'être déchiffrés. La sortie du bloc 25 fournit le flux de k symboles de données décodées à destination, par exemple, d'un téléviseur 24.

En variante au chiffrement, on peut également utiliser un canal sécurisé pour transmettre les 4 % des symboles destinés à conditionner l'obtention correcte des données côté récepteur.

Un inconvénient de la solution de la figure 3 est qu'elle n'est pas assez sûre (pas assez résistante à la cryptanalyse). En effet, des attaques sur les 96 % de symboles non soumis au chiffrement peuvent permettre de retrouver les symboles en clair. Par exemple, au moyen d'analyses statistiques sur les symboles de parité qui correspondent le plus souvent à une combinaison de type Ou-Exclusif de symboles source, il est possible de retrouver les données émises. En particulier, si les données source sont constituées d'un nombre important de données nulles (octet = 00), les données sont transmises quasiment en clair. De plus, s'il s'agit d'un fichier texte, une analyse lexicale permet assez facilement de retrouver des parties du contenu d'origine. En outre, si un même fichier est transmis deux fois avec un faible nombre de bits de différence, le flux de sortie obtenu est quasiment identique, ce qui constitue aussi une faiblesse. Pour que le chiffrement soit efficace, il faudrait que le flux d'entrée soit parfaitement aléatoire, ce qui n'est en pratique jamais le cas.

### Résumé de l'invention

La présente invention vise à pallier tout ou partie des inconvénients des solutions connues combinant un traitement par code correcteur d'erreur à un chiffrement pour une transmission de données numériques.

L'invention vise plus particulièrement à proposer une solution améliorant la résistance à la cryptanalyse des données transmises, sans pour autant revenir à une solution requérant le chiffrement de l'intégralité des données.

L'invention vise également à proposer une solution particulièrement adaptée aux systèmes de diffusion à grande échelle.

L'invention vise également à proposer une solution compatible avec n'importe quel algorithme de chiffrement.

L'invention vise également à proposer une solution particulièrement adaptée à l'utilisation de codes correcteurs d'erreur de type LDPC.

L'invention vise également à proposer une solution compatible avec la création de groupes et sous-groupes d'utilisateurs.

Pour atteindre tout ou partie de ces objets ainsi que d'autres, la présente invention prévoit un procédé de codage de données numériques représentées par des symboles source, par un code correcteur d'erreur de génération de symboles de parité à partir, pour chaque symbole de parité, de plusieurs symboles source et d'au moins un symbole de parité de rang précédent, le procédé comportant au moins des étapes de :
soumettre une partie des symboles source à au moins un premier chiffrement ; et
soumettre les symboles chiffrés obtenus et le reste des symboles source non chiffrés au code correcteur d'erreur.

Selon un mode de mise en oeuvre de la présente invention, ladite partie de symboles source est soumise à un deuxième chiffrement pour transmission sans codage, en plus des symboles de parité.

L'invention prévoit également un procédé de décodage de données reçues, comportant au moins des étapes de :
déchiffrer les symboles soumis au deuxième chiffrement et reçus sans codage ;
soumettre les symboles déchiffrés au premier chiffrement ; et
soumettre les symboles issus de l'étape précédente et les symboles de parité reçus, à un décodage par le code correcteur d'erreur.

Selon un mode de mise en oeuvre de la présente invention, les premier et deuxième chiffrements diffèrent par la clé utilisée et/ou par l'algorithme de chiffrement.

Selon un mode de mise en oeuvre de la présente invention, le nombre de symboles source chiffrés est compris entre 0,1 % et 1 % du nombre total de symboles source.

Selon un mode de mise en oeuvre de la présente invention, les symboles source à chiffrer sont choisis de telle sorte que chaque symbole de parité comporte au moins un symbole source chiffré.

Selon un mode de mise en oeuvre de la présente invention, le code correcteur d'erreur est représentée par une matrice de parité dans laquelle chaque ligne représente une équation d'obtention d'un symbole de parité et chaque colonne représente un symbole source ou un symbole de parité, chaque symbole de parité étant obtenu par une combinaison des symboles source et de parité identifiés dans les colonnes de la ligne correspondante.

Selon un mode de mise en oeuvre de la présente invention, les symboles source identifiés dans moins de 1 % des lignes de la matrice à partir de la première sont soumis au chiffrement.

Selon un mode de mise en oeuvre de la présente invention, la partie de symboles de parité de la matrice est en escalier.

Selon un mode de mise en oeuvre de la présente invention, la partie de symboles de parité de la matrice est en triangle.

Selon un mode de mise en oeuvre de la présente invention, le procédé est appliqué à des données radiodiffusées.

Selon un mode de mise en oeuvre de la présente invention, le procédé est appliqué à des données transmises par un réseau de télécommunication.

L'invention prévoit également un émetteur de données numériques dans un système de transmission à code correcteur d'erreur.

L'invention prévoit également un récepteur de données numériques transmises par un système à code correcteur d'erreur.

L'invention prévoit également un système de transmission de données numériques en application d'un code correcteur d'erreur.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 qui a été décrite précédemment représente, de façon très schématique et sous forme de blocs, un exemple de système de diffusion du type auquel s'applique la présente invention ;
les figures 2A, 2B et 2C qui ont été décrites précédemment illustrent un mécanisme de codage par code correcteur d'erreur de type LDPC ;
la figure 3 qui a été décrite précédemment illustre, de façon très schématique et sous forme de blocs, une technique connue combinant un chiffrement et un code correcteur d'erreur ;
la figure 4 représente, de façon très schématique et sous forme de blocs, un exemple de système de chiffrement et de codage selon un mode de réalisation d'un premier aspect de la présente invention ;
la figure 5 illustre, par un exemple de matrice de parité, un premier mode de mise en oeuvre de la présente invention selon son premier aspect ;
la figure 6 illustre, par un exemple de matrice de parité, un deuxième mode de mise en oeuvre de la présente invention selon son premier aspect ;
les figures 7A et 7B illustrent, par des représentations matricielles, un mode de mise en oeuvre de la présente invention selon un deuxième aspect ;
la figure 8 représente, de façon très schématique et sous forme de blocs, un mode de réalisation d'un système de transmission de données numériques selon le deuxième aspect de la présente invention ; et
la figure 9 représente, de façon très schématique et sous forme de blocs, un autre mode de réalisation d'un système de transmission de données numériques selon le deuxième aspect de la présente invention.

De mêmes éléments ont été désignés par les mêmes références aux différentes figures. De plus, pour des raisons de clarté, seuls les étapes et éléments qui sont utiles à la compréhension de l'invention ont été représentés aux figures et seront décrits par la suite. En particulier, les moyens de transmission proprement dits, notamment de modulation et démodulation n'ont pas été détaillés, l'invention étant compatible avec tout système classique. De plus, les algorithmes de chiffrement utilisables par l'invention n'ont pas non plus été détaillés, celle-ci étant là encore compatible avec tout algorithme symétrique classique.

### Description détaillée

Selon un premier aspect, la présente invention propose de sélectionner une partie des symboles source à soumettre à un chiffrement puis d'appliquer le codage à tous les symboles qu'ils soient ou non chiffrés.

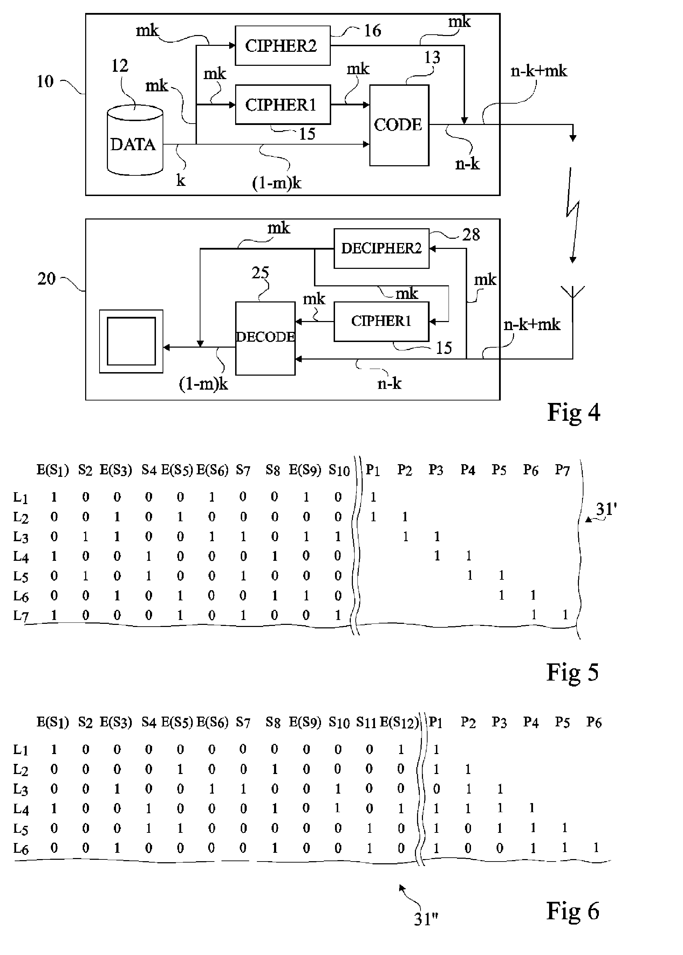

La figure 4 représente, de façon très schématique et sous forme de blocs, un mode de réalisation d'un système de transmission chiffrée et codée selon ce premier aspect de la présente invention.

Côté émetteur 10, des données DATA (12) à transmettre sont soumises, pour partie (mk symboles source avec m<1) à un premier algorithme de chiffrement (bloc 15, CIPHER1) pour être soumis chiffrés avec le reste (1-m)k des symboles source (non chiffrés) au code correcteur d'erreur (bloc 13, CODE). Ces mk symboles source sont également transmis, soit chiffrés par le premier algorithme, soit comme cela est représenté chiffrés par un deuxième algorithme (bloc 16, CIPHER2), sans passer par le code correcteur d'erreur. Le deuxième algorithme de chiffrement diffère du premier par le type d'algorithme et/ou par la clé utilisée. Une différence importante par rapport aux solutions précédentes est que les mk symboles source chiffrés sont également pris en compte par le code correcteur d'erreur 13. Le code 13 fournit n-k symboles de parité auxquels s'ajoutent, pour la transmission, les mk symboles sources transmis chiffrés (sans passer par le code correcteur d'erreur).

Côté récepteur 20, dans le flux de n-k(1-m) symboles reçus, les mk symboles source chiffrés sont déchiffrés en étant soumis au deuxième algorithme (bloc 28, DECIPHER2). Les mk symboles source en clair sont ensuite chiffrés par le premier algorithme (bloc 15, CIPHER1) pour être fournis au décodeur (bloc 25, DECODE). Le décodeur fournit les (1-m)k symboles sources, les mk symboles manquants étant fournis directement par le deuxième algorithme. Les k symboles sont alors exploités, par exemple, par un téléviseur.

Si les deux algorithmes de chiffrement sont identiques et utilisent la même clé, il n'est pas nécessaire, côté réception, de rechiffrer les mk symboles. Ils sont déchiffrés pour être utilisés directement et sont en parallèle soumis, tels que reçus, au code 25 avec le reste des symboles. Une telle variante est cependant moins performante du point de vue de la sécurité des données transmises (résistance à la cryptanalyse).

La proportion m de symboles soumis au chiffrement doit rester faible (par exemple, comprise entre 0,1 % et 10 %, et de préférence entre 0,1 % et 1 %) pour ne pas retomber dans les inconvénients des techniques consistant à chiffrer puis à coder l'ensemble des symboles.

La figure 5 illustre, par une représentation d'une matrice de parité 31', un mode de mise en oeuvre de la présente invention selon son premier aspect.

Une caractéristique de ce mode de mise en oeuvre est de chiffrer (chiffrement symbolisé par une fonction E en figure 5), un nombre réduit des premières lignes de symboles source présents dans la matrice de parité 31'. Dans cet exemple, les symboles S₁, S₆, S₉, S₃ et S₅ de données présents dans les deux premières lignes (L₁ et L₂) de la matrice 31' sont chiffrés avant codage, les autres symboles qui n'apparaissent que dans les lignes ultérieures sont codés en clair. L'application du codage en utilisant une matrice de parité 31' du type LDPC en escalier entraîne que tous les symboles de parité contiendront des données chiffrées, ce qui réduit le risque de cryptanalyse de celles-ci. Le calcul des symboles de parité s'effectue, comme précédemment, par une combinaison OU-Exclusif des symboles source (chiffrés ou non) et de parité de la ligne.

Côté réception, en recevant les n-k symboles Pⱼ (j prenant les valeurs de 1 à n-k), seul un récepteur possédant la ou les clés de chiffrement sera capable, en déchiffrant les mk symboles sources transmis chiffrés mais non codés, puis en les chiffrant de nouveau avec le premier algorithme, de reconstituer un flux de symboles de données correct.

Une telle technique est envisageable du fait que la matrice de parité prend en compte, dans des symboles ultérieurs, le contenu des symboles précédents.

La figure 6 représente une matrice de parité 31" selon un deuxième mode de mise en oeuvre du premier aspect de l'invention.

Les symboles source à chiffrer (dans cet exemple S₁, S₅, S₈, S₁₂) sont choisis de telle sorte que chaque ligne de la matrice de parité 31" contient, dans sa partie de symboles source, au moins un symbole chiffré.

Un avantage est que cela améliore la confidentialité des données par rapport aux solutions de l'art antérieur.

La figure 6 illustre également une autre modification par rapport au mode de réalisation précédent qui est d'utiliser une matrice de parité LDPC de type triangle, c'est-à-dire dans laquelle chaque symbole de parité à partir du troisième P₃ est susceptible de combiner plus de deux symboles de parité précédents. Une telle technique améliore la sécurité et la correction d'erreur, c'est-à-dire nécessite la réception d'un nombre moindre de symboles par un récepteur afin qu'il puisse décoder le contenu original avec succès.

Comme les matrices de symboles peuvent comporter plusieurs milliers de colonnes et plusieurs milliers de lignes, le fait de ne chiffrer qu'un petit nombre de symboles est intéressant du point de vue du temps de traitement.

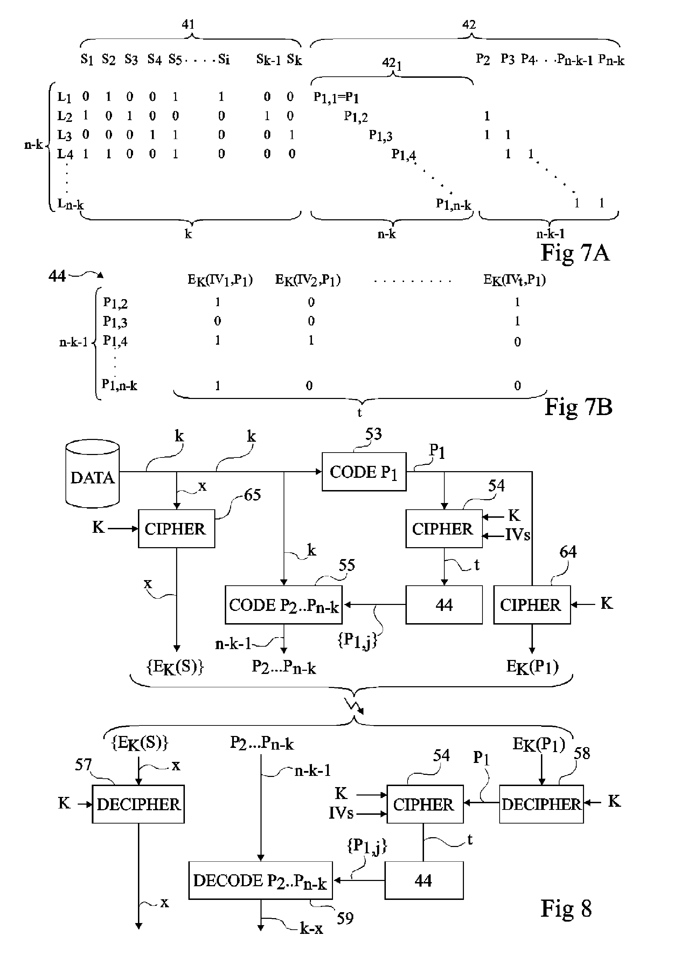

Les figures 7A et 7B illustrent, par des représentations matricielles, un mode de mise en oeuvre de l'invention selon un deuxième aspect.

Une caractéristique de ce deuxième aspect est d'utiliser, outre la matrice de parité dont la partie symboles de parité est, par exemple, de type LDPC en escalier, une deuxième matrice de valeurs chiffrées pour générer plusieurs combinaisons respectivement prises en compte dans le calcul des symboles de parité. Les valeurs chiffrées sont, de préférence, obtenues par chiffrement d'un ou plusieurs premiers symboles de parité (nombre à choisir en fonction des exigences du système pour garantir la confidentialité de l'information). Les combinaisons de valeurs chiffrées sont alors prises en compte dans le calcul des symboles de parité de rangs supérieurs.

Par exemple, la sous-matrice de symboles de parité utilisée est une matrice du type en escalier dans laquelle une première colonne contient les résultats de différentes combinaisons de plusieurs variantes chiffrées du premier symbole de parité qui, dans ce cas, est transmis de façon sécurisée au récepteur. Les combinaisons sont, de préférence, différentes pour chaque ligne de la matrice. Par conséquent, la contribution du premier symbole de parité est différente dans chaque symbole de parité des lignes suivantes.

Dans l'exemple de la figure 7A, la sous-matrice 41 de symboles source est établie de façon classique (figure 2B), sans symbole chiffré. La sous-matrice de parité 42 est établie en suivant une technique de LDPC en escalier pour tous les symboles de parité à partir du deuxième (P₂ à Pₙ₋ₖ). De plus, toutes les lignes à partir de la deuxième, donc tous les symboles de parité calculés à partir du deuxième, prennent en compte une valeur P_{1,j} fonction du premier symbole de parité P₁ chiffré. Cela est illustré par une sous-matrice 42₁ comportant, pour chaque ligne à partir de la deuxième, une valeur P_{1,2}, P_{1,3}..., P_{1,n-k}. Dans cet exemple, on suppose que le symbole P₁ n'est pas chiffré (P_{1,1}=P₁).

La figure 7B représente une matrice de chiffrement 44 illustrant, arbitrairement par une représentation matricielle, un exemple de génération des valeurs P_{1,2}, P_{1,3}..., P_{1,n-k}. Chaque valeur est obtenue par combinaison de plusieurs variantes E_{K}(IV_{1'} P₁), E_{K}(IV₂, P₁)..., E_{K} (IVₜ, P₁) du chiffrement du symbole de parité P₁ avec une clé K. Ces variantes sont, par exemple, obtenues en modifiant un vecteur d'initialisation IV de l'algorithme de chiffrement E. L'algorithme de chiffrement est un algorithme symétrique (par exemple, de type DES ou AES utilisé en mode CBC - Cipher Block Chaining). Grâce à la combinaison de plusieurs variantes chiffrées pour générer les valeurs P_{1,j}, le nombre t de vecteurs d'initialisation n'a pas besoin d'être important (de préférence compris entre 0,1 % et 10 % du nombre de symboles de parité. Dans cet exemple, le symbole P₁, de préférence chiffré, doit être reçu par le récepteur pour qu'il puisse reconstituer les autres symboles. De plus, le recevoir en premier améliore les performances de décodage.

La combinaison des différentes valeurs chiffrées dans la création des valeurs P_{1,j} s'effectue, par exemple, au moyen d'une opération Ou-Exclusif. On pourra également utiliser d'autres opérations, par exemple des opérations de type rotation des bits contenus dans les symboles. L'opérateur de combinaison est, de préférence, choisi en fonction de l'algorithme de chiffrement exécuté afin de ne pas dégrader ses performances du point de vue de sa résistance à la cryptanalyse. On pourra également combiner différents types d'opérations. Dans ce cas, la matrice de chiffrement 44 contient l'information (par exemple par un mot de deux bits ou plus selon le nombre d'opérateurs) sur la façon dont sont combinées les variantes chiffrées E_{K}(IV₁, P₁) E_{K}(IV₂, P₁) ... , E_{K}(IVₜ, P₁) dans l'obtention de la combinaison P_{1,j} affectée à chaque symbole de parité Pⱼ. Par exemple, un 0 (00) dans la matrice 44 indique que la variante n'est pas prise en compte, un 1 (01) indique que la variante est prise en compte par une combinaison OU-Exclusif, un 2 (10) ou un 3 (11) indique une rotation d'un nombre fixé (par exemple 4 ou 7) de bits de la variante courante avant combinaison par un OU-Exclusif avec le résultat de combinaison des variantes précédentes. Dans le mode de réalisation simplifié de la figure 7B, on suppose simplement un choix entre deux possibilités (0 : non prise en compte de la variante de la colonne ; 1: prise en compte de cette variante par une combinaison OU-Exclusif).

De préférence, la matrice de chiffrement 44 est modifiée périodiquement. Pour cela, il suffit d'envoyer la graine de génération de la matrice de chiffrement et que le récepteur contienne les outils logiciels et/ou matériels pour reconstruire cette matrice à partir de cette graine. Cela revient à utiliser, pour transmettre la matrice de chiffrement, la même technique que celle utilisée pour transmettre la matrice de parité.

Le mode de mise en oeuvre des figures 7A et 7B présente, par rapport au mode de réalisation de la figure 6, l'avantage d'être meilleur en correction d'erreur et, par rapport au mode de réalisation de la figure 5, l'avantage d'être meilleur en résistance à la cryptanalyse.

Selon une variante de mise en oeuvre, le symbole P₁ est construit à partir de tous les symboles source (sous-matrice 41 ne comportant que des 1 dans sa première ligne). Cela améliore l'effet dit "d'avalanche" dans les autres symboles de parité et, par conséquent, le chiffrement, sans nuire à la capacité de correction d'erreur.

Selon un autre mode de mise en oeuvre, le premier symbole P_{1,1} est lui-même issu de la matrice de chiffrement 44 qui combine des valeurs chiffrées indépendantes des symboles source. Dans la représentation des figures 7A et 7B, cela revient à ajouter une ligne P_{1,1} à la matrice 44 et à prendre en compte, comme valeur à chiffrer, une quantité autre qu'une combinaison P₁ de tout ou partie des symboles source. La matrice 42 comporte également une colonne de plus pour calculer le premier symbole de parité P₁ en fonction des symboles sources de la première ligne et de la valeur P_{1,1}. Il n'y a alors plus de dépendance entre les valeurs P_{1,j} et les données source.

La figure 8 représente, de façon très schématique et sous forme de blocs, un mode de réalisation d'un système de chiffrement et de codage selon le deuxième aspect de la présente invention. Les symboles source des données DATA (12) pris en compte dans le calcul du premier symbole de parité servent à l'obtention de celui-ci (bloc 53, CODE P1). Ce symbole P1 est alors chiffré (bloc 54, CIPHER) en fonction de différents vecteurs d'initialisation IVs et de la clé K. Les t valeurs chiffrées obtenues sont combinées en fonction de la matrice de chiffrement 44 pour obtenir les valeurs respectives P_{1,j} du premier symbole de parité à prendre en compte pour le codage des autres (bloc 55, CODE P₂ ... Pₙ₋ₖ). L'ensemble des n-k symboles de parités est alors transmis (diffusé). De préférence, on sélectionne également un petit nombre x (de préférence entre 0,1 et 1 %) des k symboles source que l'on chiffre avec la clé K (bloc 65, CIPHER). Les x symboles source chiffrés E_{K}(S) avec la clé K sont transmis en plus du premier symbole de parité, de préférence également chiffré E_{K}(P₁) avec cette clé K (bloc 64, CIPHER), et des n-k-1 symboles de parité restants.

Côté réception, le premier symbole de parité est déchiffré avec la clé K (bloc 58, DECIPHER) de même que, s'il y a lieu, les x symboles source E_{K}(S) (bloc 57, DECIPHER). Le premier symbole de parité P₁ obtenu permet de reconstituer les valeurs E_{K} (IV₁, P₁), E_{K}(IV₂, P₁)... , E_{K} (IVₜ, P₁) chiffrées avec la clé K et de reconstituer ainsi les combinaisons P_{1,j} (bloc 44) permettant de décoder les n-k-1 symboles de parité P₂..., Pₙ₋ₖ restants (bloc 59, DECODE P₂...Pₙ₋ₖ). On obtient alors les k-x symboles source restants.

Les matrices de parité (sous-matrices 41 et 42) et de chiffrement 44 doivent être transmises (de préférence en début de session et/ou de façon sécurisée) ainsi que les vecteurs d'initialisation du chiffrement (ou une graine permettant de les reconstituer) de façon à permettre à tous les récepteurs compatibles de reconstituer les différentes matrices. Cette reconstitution ne suffit toutefois à récupérer les symboles source. Seuls les récepteurs possédant la clé K seront en mesure de déchiffrer le premier symbole de parité pour décoder de façon correcte les autres symboles.

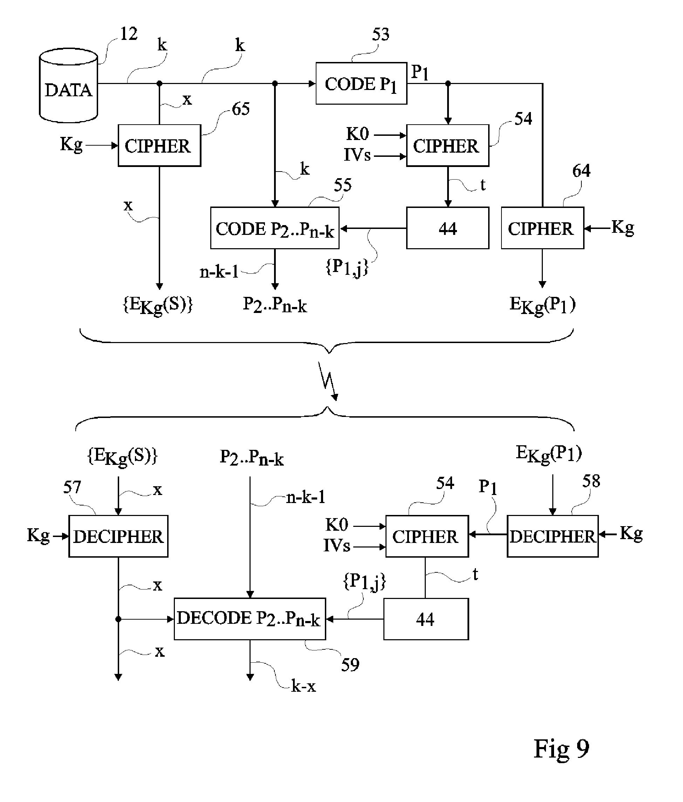

La figure 9 représente, de façon très schématique et sous forme de blocs, un autre mode de réalisation du deuxième aspect de l'invention.

Selon ce mode de réalisation, on affecte une clé Kg par utilisateur ou par sous-groupe d'utilisateurs en plus d'une clé K₀ servant au chiffrement des symboles de parité. Par rapport au mode de réalisation précédent, le premier symbole de parité transmis P₁ correspond à une valeur chiffrée E _{Kg} (P₁) avec une clé Kg (bloc 64, CIPHER) différente de la clé K₀ servant à l'obtention des valeurs P_{1,j}. Les x des k symboles source sont chiffrés avec cette clé Kg (bloc 65, CIPHER). Les x symboles source chiffrés E_{Kg} (S) avec la clé Kg sont transmis en plus du premier symbole de parité chiffré avec cette clé Kg et des n-k-1 symboles de parité dépendant des valeurs chiffrées avec la clé K₀. Le cas échéant (non représenté), les x symboles source sont utilisés dans leur version chiffrée pour le codage, ce qui revient à combiner les deux aspects de l'invention. Bien entendu, les matrices de chiffrement et de parité (ou des graines permettant leur génération) sont également transmises, chiffrées ou non avec la clé K₀. Il en est de même pour les vecteurs d'initialisation générant les différentes valeurs du chiffrement du premier symbole de parité. Selon une variante simplifiée, une seule clé Kg est utilisée. Cela revient à ne prévoir qu'un seul groupe.

Côté réception, les x symboles source E_{Kg}(S) sont déchiffrés (bloc 57, DECIPHER) avec la clé Kg, de même que le premier symbole de parité (bloc 58, DECIPHER). Le premier symbole de parité P₁ obtenu permet de reconstituer les valeurs E_{K0} (IV₁, P₁), E_{K0} (IV₂, P₁)..., E_{K0} (IVₜ, P₁) chiffrées avec la clé K₀ et de reconstituer ainsi les combinaisons P_{1,j} (bloc 44) permettant de décoder, le cas échéant en utilisant les x symboles source déchiffrés, les n-k-1 symboles de parité P₂..., Pₙ₋ₖ restants (bloc 59, DECODE P₂...Pₙ₋ₖ) . On obtient alors les k-x symboles source restants.

Un récepteur ne possédant que la clé K₀ est incapable de reconstituer les données. De même, un récepteur ne possédant que la clé Kg n'est capable d'obtenir qu'une toute petite partie (moins de 1 %) des symboles source.

Ce mode de réalisation permet de diffuser des données à des sous-groupes d'utilisateurs d'un groupe commun possédant la clé K₀.

Un avantage est que la majeure partie (plus de 99 %) du contenu transmis est le même pour tous les récepteurs, seule une faible partie de ces symboles diffère selon les récepteurs, ce qui simplifie les calculs.

Une restriction par groupes d'utilisateurs telle qu'exposée en relation avec la figure 9 pourra également être mis en oeuvre avec le premier aspect de l'invention. Par exemple, une clé commune sert au deuxième algorithme de chiffrement (15, figure 4) tandis que des clés de groupes sont utilisées pour le premier algorithme (blocs 14 et 26).

Un avantage de la présente invention est qu'elle améliore la sécurité des données transmises.

Un autre avantage de la présente invention selon son deuxième aspect est qu'elle est compatible avec la gestion de groupes d'utilisateurs différents.

Bien entendu, la présente invention est susceptible de diverses variantes et modifications qui apparaîtront à l'homme de l'art. En particulier, la mise en oeuvre pratique de l'invention à partir d'outils matériels et/ou logiciels classiques (par exemple, par des circuits électroniques et/ou des microprocesseurs) est à la portée de l'homme de métier à partir des indications fonctionnelles données ci-dessus. En particulier, la formation du flux de symboles issu du codage et chiffrement de l'invention avec, si besoin, des symboles de paramétrage des récepteurs (par exemple, indiquant le type de chiffrement appliqué) ne pose pas problème. De plus, l'invention s'applique à différents types d'algorithmes de chiffrement dont le choix est à faire par l'homme du métier en fonction de l'application. En outre, dans les modes de réalisation où des symboles source sont transmis sans codage, le nombre de ces symboles (entre 0,1% et 1 % des symboles source) est à choisir en réalisant un compromis entre le calcul requis côté récepteur et la sécurité (résistance à la cryptanalyse).

## Revendications

1. Procédé de codage de données numériques (DATA) représentées par des symboles source (Sᵢ), par un code correcteur d'erreur de génération de symboles de parité (Pⱼ) à partir, pour chaque symbole de parité, de plusieurs symboles source et d'au moins un symbole de parité de rang précédent, **caractérisé en ce qu'**il comporte au moins des étapes de :
soumettre une partie (mk) des symboles source à au moins un premier chiffrement (15) ; et
soumettre les symboles chiffrés obtenus et le reste des symboles source non chiffrés au code correcteur d'erreur (13).

2. Procédé selon la revendication 1, dans lequel ladite partie (mk) de symboles source (Sᵢ) est soumise à un deuxième chiffrement (16) pour transmission sans codage, en plus des symboles de parité.

3. Procédé de décodage de données reçues, codées selon le procédé de la revendication 2, **caractérisé en ce qu'**il comporte au moins des étapes de :
déchiffrer (26) les symboles soumis au deuxième chiffrement (16) et reçus sans codage ;
soumettre les symboles déchiffrés au premier chiffrement (15) ; et
soumettre les symboles issus de l'étape précédente et les symboles de parité (Pⱼ) reçus, à un décodage (25) par le code correcteur d'erreur.

4. Procédé selon l'une quelconque des revendications 2 et 3, dans lequel les premier (15) et deuxième (16) chiffrements diffèrent par la clé utilisée et/ou par l'algorithme de chiffrement.

5. Procédé selon l'une quelconque des revendications 1 à 4, dans lequel le nombre (mk) de symboles source chiffrés est compris entre 0,1% et 1 % du nombre total (k) de symboles source (Sᵢ).

6. Procédé selon l'une quelconque des revendications 1 et 5, dans lequel les symboles source (Sᵢ) à chiffrer sont choisis de telle sorte que chaque symbole de parité (Pⱼ) comporte au moins un symbole source chiffré.

7. Procédé selon l'une quelconque des revendications 1 à 6, dans lequel le code correcteur d'erreur est représentée par une matrice de parité (31', 31") dans laquelle chaque ligne représente une équation d'obtention d'un symbole de parité (Pⱼ) et chaque colonne représente un symbole source (Sᵢ) ou un symbole de parité, chaque symbole de parité étant obtenu par une combinaison des symboles source et de parité identifiés dans les colonnes de la ligne correspondante.

8. Procédé selon la revendication 7, dans lequel les symboles source (Sᵢ) identifiés dans moins de 1 % des lignes de la matrice (31', 31") à partir de la première sont soumis au chiffrement.

9. Procédé selon l'une quelconque des revendications 7 et 8, dans lequel la partie de symboles de parité (Pⱼ) de la matrice (31') est en escalier.

10. Procédé selon l'une quelconque des revendications 7 et 8, dans lequel la partie de symboles de parité (Pⱼ) de la matrice (31") est en triangle.

11. Procédé selon l'une quelconque des revendications 1 à 10, appliqué à des données radiodiffusées.

12. Procédé selon l'une quelconque des revendications 1 à 10, appliqué à des données transmises par un réseau de télécommunication.

13. Emetteur de données numériques dans un système de transmission à code correcteur d'erreur, **caractérisé en ce qu'**il comporte des moyens pour la mise en oeuvre du procédé selon l'une quelconque des revendications 1 à 12.

14. Récepteur de données numériques transmises par un système à code correcteur d'erreur, **caractérisé en ce qu'**il comporte des moyens de décodage et de déchiffrement de données reçues, codées conformément au procédé selon l'une quelconque des revendications 1 à 12.

15. Système de transmission de données numériques en application d'un code correcteur d'erreur, **caractérisé en ce qu'**il comporte des moyens d'émission et de réception conformes aux revendications 13 et 14.
